# FASCICULE DE BREVET EUROPEEN

(11) **EP 0 784 420 B1**
(45) Date de publication et mention de la délivrance du brevet: **15.09.1999**
(21) Numéro de dépôt: 95933466.5
(22) Date de dépôt: 02.10.1995
(51) Int. Cl.: A01F 12/18, A01F 12/28

(54) **ENSEMBLE DE BATTAGE POUR MOISSONNEUSE-BATTEUSE**
DRESCHWERK FÜR MÄHDRESCHER
COMBINE HARVESTER THRESHING ASSEMBLY

(30) Priorité: 03.10.1994 FR 9412034
(43) Date de publication de la demande: 23.07.1997
(73) Titulaire: Seneclauze, Thierry, 26140 Anneyron (FR); Seneclauze, Frédéric, 26140 Anneyron (FR)
(72) Inventeur: Seneclauze, Thierry, 26140 Anneyron (FR); Seneclauze, Frédéric, 26140 Anneyron (FR)
(74) Mandataire: Maureau, Philippe
(86) Numéro de dépôt international: FR9501276
(87) Numéro de publication internationale: WO9610327

(56) Documents cités:
- EP-A- 0 092 599
- EP-A- 0 396 968
- DE-B- 1 297 391
- DE-U- 8 226 879
- US-A- 1 853 784
- US-A- 2 266 806
- US-A- 3 410 271
- US-A- 4 165 751
- US-A- 4 227 538
- US-A- 4 796 645

## Description

La présente invention concerne un ensemble de battage pour moissonneuse-batteuse, comprenant un batteur rotatif de forme générale cylindrique et d'axe perpendiculaire au sens d'avancement de la machine, et un contre-batteur de courbure cylindrique ayant le même axe que le batteur, enveloppant une portion de la partie inférieure du batteur.

Les moissonneuses-batteuses existantes présentent des batteurs de diamètre de 450, 600 ou 660 millimètres et de longueur variant entre 1 mètre et 1,60 mètre, selon les modèles. Le batteur est classiquement constitué par des flasques métalliques sur lesquels sont fixées des battes métalliques, en nombre pair (généralement de six à huit), régulièrement réparties sur la circonférence des flasques. Les battes présentent des stries obliques de sens inverse d'une batte à l'autre, pour empêcher le glissement latéral de la récolte.

Les contre-batteurs comprennent des fers plats longitudinaux disposés sur chant, constituant des contre-battes, réunis par des fils métalliques pour former une grille au travers de laquelle passent les grains séparés par le batteur. Le contre-batteur est déplaçable verticalement par rapport au batteur, sur une course limitée, de l'ordre de 3 à 5 centimètres, pour régler l'intervalle existant entre lui et le batteur, en fonction du type de grains à récolter et des conditions de la récolte. Ce déplacement est généralement réalisé par un jeu de tringles et de bielles dont le mouvement est commandé, depuis le poste de conduite de la machine, au moyen de manivelles ou de leviers.

En aval de cet ensemble de battage, les moissonneuses conventionnelles comprennent un tambour de dégagement de la paille, couramment dénommé "tire-paille", constitué d'un rotor muni de pales, ce tire-paille ayant essentiellement pour fonction d'éviter l'enroulement de la paille autour du batteur et de la projeter vers l'arrière. En aval du tire-paille se trouvent plusieurs secoueurs successifs, qui brassent la paille, provoquent son aération et favorisent la séparation du grain non déjà séparé de la paille par l'ensemble de battage.

Les moissonneuses de ce type sont simples et polyvalentes mais présentent l'inconvénient important d'avoir des performances limitées, les rendant inadaptées aux conditions d'exploitation actuelles.

Il existe des machines réalisant un battage dit "à séparation forcée", c'est-à-dire comprenant, en aval de l'ensemble de battage, une série d'organes de séparation complétant la séparation réalisée par le batteur et le contre-batteur. Une machine de ce type comprend un tire-paille, un séparateur de paille et un ensemble de séparation par frottements et force centrifuge, dit "twin flow", qui divise le tapis de paille en deux pour son traitement par deux unités travaillant en parallèle. Une autre machine existante comprend une pluralité de rouleaux séparateurs successifs.

Ces machines offrent de meilleures performances que les systèmes conventionnels en ce qui concerne la séparation du grain et de la paille. Elles présentent toutefois les inconvénients d'être complexes, d'être difficiles à régler et d'obliger à des modifications fréquentes de réglage. De plus, elles détériorent la paille du fait de la succession d'opérations de séparation, ce qui rend cette paille impropre à certaines utilisations particulières, telles que la nourriture de chevaux. Les grilles de nettoyage de ces machines sont rapidement encrassées par les morceaux de paille plus ou moins hachés, ce qui réduit notablement leur efficacité.

La présente invention vise à remédier à l'ensemble de ces inconvénients en fournissant un ensemble de battage ayant de bonnes performances, restant simple de fabrication et de réglage, et ne détériorant pas la paille obtenue.

A cette fin, dans l'ensemble de battage qu'elle concerne, le batteur présente un diamètre d'au moins 900 millimètres, c'est-à-dire au moins 40 % plus important que celui des batteurs existants, est fermé longitudinalement par une paroi circonférentielle continue, et comprend à sa périphérie une alternance de battes, portées par des nervures faisant saillie radialement vers l'extérieur, et de rangées de doigts faisant saillie sensiblement radialement vers l'extérieur.

La combinaison de ces caractéristiques permet au batteur selon l'invention de réaliser une séparation du grain et de la paille nettement supérieure à celle réalisée par les ensembles de battages existants, en évitant ou tout au moins en limitant l'emploi en aval d'organes successifs de séparation, et ce sans détérioration de la paille obtenue.

En effet, en arrière de chaque batte, les doigts précités viennent réaliser une séparation de la paille et des grains entre le batteur et le contre-batteur, tandis que la paroi circonférentielle continue et la nervure suivante créent un souffle tangentiel lors de leur passage au-dessus du contre-batteur, ce qui favorise le passage du grain au travers du contre-batteur. Cette séparation se produit d'autant plus que le diamètre du batteur est important, et que, donc, la surface d'enveloppement du batteur par le contre-batteur est grande, de l'ordre de 2 m².

Lorsque, de préférence, le batteur et le contre-batteur présentent une longueur importante, de l'ordre de 2 mètres, les performances obtenues par l'ensemble de battage selon l'invention sont plus que doublées par rapport aux systèmes conventionnels. Pour permettre de donner une telle longueur à l'ensemble de battage sans élargir exagérément la largeur du bâti de la machine, le batteur est avantageusement entraîné en rotation au moyen d'un moteur hydrostatique. Ce type d'entraînement permet un gain d'encombrement latéral important par rapport aux entraînements à courroies existants, et rend possible le logement d'un tel ensemble de battage dans un bâti ayant sensiblement les mêmes dimensions que les bâtis des machines existantes.

Cette séparation importante réalisée au niveau du batteur évite ou limite l'emploi d'organes de séparation successifs placés en aval de l'ensemble de battage, ce qui permet en outre de libérer l'espace nécessaire au logement dans la machine de cet ensemble de battage de grand diamètre.

De plus, le batteur selon l'invention préserve la paille, grâce à la séparation importante qu'il permet, à son fort diamètre, à son utilisation à faible vitesse de rotation, de l'ordre de 400 tours/minute, et à ses doigts de séparation. La séparation complémentaire qu'il est nécessaire de réaliser en aval est bien moins importante que celle devant être réalisée sur les machines existantes, de sorte que la paille obtenue est presque intacte.

Le diamètre important du batteur permet également que les surfaces en regard du batteur et du contre-batteur aient une courbure moindre que dans les ensembles de battage existants, ce qui facilite le passage du tapis de paille et limite par conséquent les risques de bourrage, tout en favorisant la séparation des grains et de la paille.

De préférence, le diamètre du batteur est de l'ordre de 900 millimètres. Il n'existe théoriquement aucune limite supérieure quant à ce diamètre, si ce n'est le poids important du batteur.

Le contre-batteur présente également des dimensions et un poids importants, ce qui empêche son déplacement au moyen de tringles et leviers ou manivelles comme selon la technique antérieure.

L'invention concerne donc des moyens de déplacement du contre-batteur, visant à permettre un positionnement très précis du contre-batteur malgré son poids important, avec conservation d'une horizontalité parfaite. En outre, il serait intéressant que ces moyens puissent permettre une course de déplacement du contre-batteur bien supérieure à celle permise par les mécanismes existants, pour permettre d'adapter la moissonneuse-batteuse selon l'invention à toutes les conditions d'utilisation pouvant se présenter, selon le type de grains ou selon les conditions de la récolte, et pour permettre de remédier très rapidement et facilement à un éventuel bourrage.

A cet effet, le châssis du contre-batteur comprend au moins deux galets latéraux, soit au moins un à chacune de ses extrémités, dont chacun est engagé, d'une part, dans une glissière inclinée aménagée dans une pièce coulissant horizontalement perpendiculairement à l'axe du contre-batteur et, d'autre part, dans une glissière fixe solidaire du châssis de la machine.

Le déplacement de ces deux pièces coulissantes selon des mouvements identiques et simultanés permet de déplacer simultanément les galets dans les glissières inclinées et dans les glissières solidaires du châssis, et donc de réaliser un mouvement de rapprochement ou d'éloignement du contre-batteur et du batteur.

Le guidage et le positionnement obtenus s'avèrent très précis, avec conservation d'une horizontalité parfaite.

Les glissières peuvent avoir une longueur importante, de sorte que le déplacement vertical du contre-batteur peut atteindre 100 millimètres et être donc de l'ordre du double ou du triple de celui des matériels existants. Le débourrage de l'ensemble de battage est ainsi facile, et peut être réalisé sans intervention manuelle.

Ce système de manoeuvre supprime la tringlerie de manoeuvre usuelle, subissant une usure à la longue. Avantageusement, les pièces coulissantes précitées sont manoeuvrées par des vérins hydrauliques, donc sans effort pour l'utilisateur.

Les glissières solidaires du châssis peuvent être verticales, pour permettre un déplacement purement vertical du contre-batteur par rapport au batteur. Toutefois, de préférence, ces glissières sont inclinées vers le bas en direction de l'arrière de la machine. Le déplacement du contre-batteur dans les glissières ainsi orientées permet de conserver un espace sensiblement constant entre les surfaces en regard du batteur et du contre-batteur.

Avantageusement, le châssis du contre-batteur présente une partie postérieure articulée autour d'un axe horizontal, de manière à pouvoir être plus ou moins inclinée dans le prolongement de la partie antérieure de ce châssis ; la course des pièces coulissantes précitées est telle que le contre-batteur peut être sorti par l'avant de la machine, après démontage du tablier de coupe, sans démontage du batteur ; et les galets peuvent être dégagés des glissières pour permettre la dépose du contre-batteur.

Pour sa bonne compréhension, l'invention est à nouveau décrite ci-dessous, en référence au dessin schématique annexé représentant, à titre d'exemple non limitatif, une forme de réalisation préférée de l'ensemble de battage pour moissonneuse-batteuse qu'elle concerne.

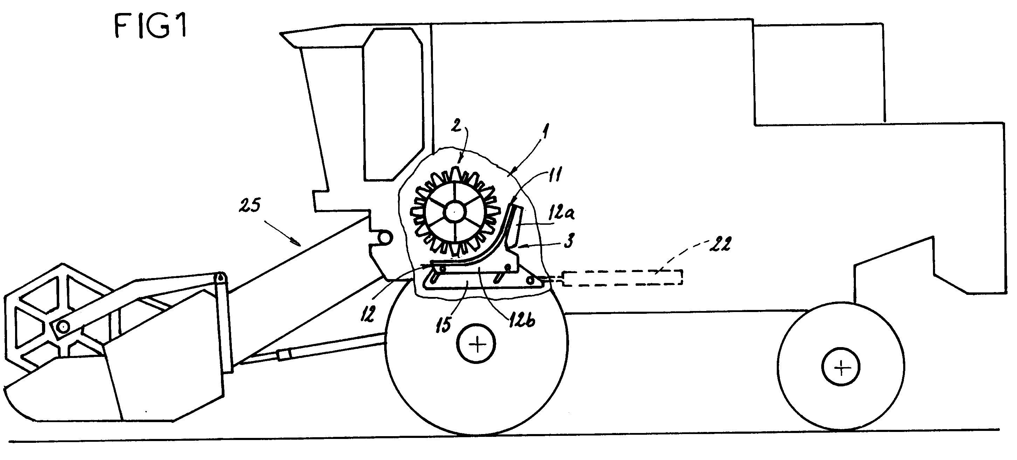

La figure 1 est une vue de côté d'une moissonneuse-batteuse équipée de cet ensemble, avec arrachement partiel ;
la figure 2 est une vue à échelle agrandie et de côté de cet ensemble ; et
la figure 3 est une vue similaire à la figure 2 de cet ensemble, dans une autre position.

Les figures représentent un ensemble de battage 1 pour moissonneuse-batteuse, comprenant un batteur rotatif 2 de forme générale cylindrique et d'axe perpendiculaire au sens d'avancement de la machine, et un contre-batteur 3 de courbure cylindrique ayant le même axe que le batteur 2, enveloppant une portion de la partie inférieure du batteur 2.

Le batteur 2 présente un diamètre de l'ordre de 900 millimètres, c'est-à-dire au moins 40 % plus important que celui des batteurs existants. Il comprend à sa périphérie une alternance de battes 5, portées par des nervures 6 faisant saillie radialement vers l'extérieur, et de rangées de doigts 7 faisant saillie sensiblement radialement vers l'extérieur.

Les nervures 6 se rejoignent les unes les autres au niveau de leur partie inférieure, de manière à constituer une paroi circonférentielle continue.

Le batteur 2 et le contre-batteur 3 ont une longueur importante, de l'ordre de 2 mètres. Le batteur 2 est entraîné en rotation autour de l'arbre 8 moyen d'un moteur hydrostatique (non représenté).

Le contre-batteur 3 présente des contre-battes 9, réunies par des fers longitudinaux 10 pour former une grille 11, au travers de laquelle passent les grains séparés de la paille par le batteur 2.

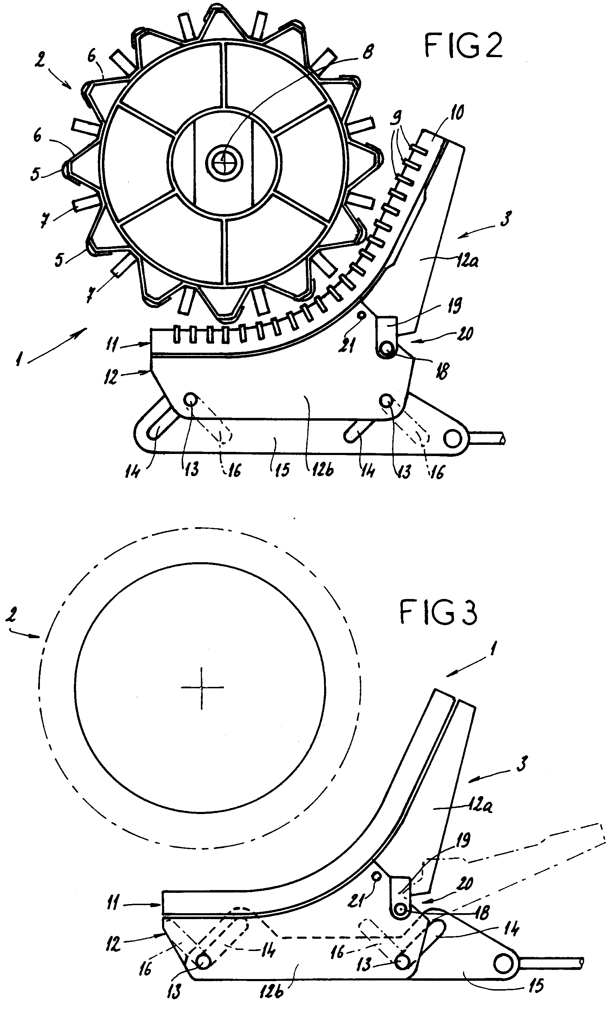

Cette grille 11 est supportée par un châssis 12 comprenant deux paires de galets latéraux 13, une à chaque extrémité. Chaque galet 13 est engagé, d'une part, dans une glissière 14, aménagée dans une pièce 15 pouvant coulisser horizontalement perpendiculairement à l'axe du contre-batteur 3, et, d'autre part, dans une glissière fixe 16, solidaire du châssis de la machine. Ces glissières 16, situées en avant-plan sur les figures 2 et 3, sont représentées en traits mixtes.

Les glissières 14 sont inclinées vers le haut en direction de l'arrière de la machine, selon un angle d'environ 45 degrés par rapport à l'horizontale, tandis que les glissières 16 sont inclinées vers le bas en direction de l'arrière de la machine, selon un même angle.

Les glissières 14 et 16 ont une longueur relativement importante, de l'ordre de 150 millimètres.

En outre, le châssis 12 du contre-batteur 3 présente une partie postérieure 12a articulée autour d'un axe horizontal. Cette articulation est constituée par un boulon 18 et par deux pattes 19 formant une chape, soudées sur ladite partie postérieure 12a du chassis 12, le boulon 18 traversant les pattes 19 et les flasques latéraux inférieurs 12b du châssis 12. Un dégagement 20 permet le basculement de cette partie postérieure 12a après retrait d'un boulon de verrouillage 21.

Les pièces coulissantes 15 sont actionnées par un vérin 22 apte à leur donner une course importante en avant du contre-batteur 3.

Ce batteur 2, de grand diamètre et équipé des battes 5, nervures 6, doigts 7 et paroi circonférentielle précités, peut réaliser une séparation du grain et de la paille nettement supérieure à celle réalisée par les ensembles de battages existants

En effet, en arrière de chaque batte 5, les doigts 7 viennent réaliser une séparation de la paille et des grains entre le batteur 2 et le contre-batteur 3, tandis que la paroi circonférentielle continue et la nervure 6 suivante créent un souffle tangentiel lors de leur passage au-dessus du contre-batteur 3, ce qui favorise le passage du grain au travers du contre-batteur 3. Cette séparation se produit d'autant plus que le diamètre du batteur 2 est important, et que, donc, la surface d'enveloppement du batteur 2 par le contre-batteur 3 est grande, de l'ordre de 2 m².

Le batteur 2 évite ou tout au moins limite l'emploi en aval d'organes successifs de séparation. Le gain d'encombrement qui en résulte permet de loger cet ensemble de battage 1 de grandes dimensions dans le bâti de la machine, sans augmentation sensible des dimensions de ce bâti par rapport aux machines existantes.

La longueur importante du batteur 2 et du contre-batteur 3 fait en outre que les performances obtenues par l'ensemble de battage selon l'invention sont plus que doublées par rapport aux systèmes conventionnels. L'emploi d'un moteur hydrostatique pour entraîner le batteur 2 permet à l'ensemble 1 d'avoir cette longueur de 2 mètres, sans élargir exagérément la largeur du bâti de la machine compte tenu du gain d'encombrement latéral rendu possible par une telle transmission par rapport aux entraînements à courroies conventionnels.

En outre, le batteur 2 selon l'invention préserve la paille, grâce à la séparation importante qu'il permet, à son fort diamètre, à son utilisation à faible vitesse de rotation, de l'ordre de 400 tours/minute, et à ses doigts de séparation 7. La séparation complémentaire qu'il est nécessaire de réaliser en aval est bien moins importante que celle devant être réalisée sur les machines existantes, de sorte que la paille obtenue est presque intacte. Cette paille peut faire l'objet d'utilisations particulières avantageuses, telles que la nourriture de chevaux.

Le diamètre important du batteur 2 permet également que les surfaces en regard du batteur 2 et du contre-batteur 3 aient une courbure moindre que dans les ensembles de battage existants, ce qui facilite le passage du tapis de paille et limite par conséquent les risques de bourrage tout en favorisant la séparation des grains et de la paille.

Concernant le contre-batteur 3, le déplacement des deux pièces coulissantes 15 selon des mouvements identiques et simultanés permet de déplacer simultanément les galets 13 dans les glissières 14 et 16, et donc de réaliser un mouvement de rapprochement ou d'éloignement du contre-batteur 3 et du batteur 2, comme cela apparaît par comparaison des figures 2 et 3.

Le guidage et le positionnement obtenus s'avèrent très précis, avec conservation d'une horizontalité parfaite malgré les dimensions et le poids important du contre-batteur 3.

La longueur importante précitée des glissières 14 et 16 fait que le déplacement vertical du contre-batteur 3 peut atteindre 100 millimètres et être donc de l'ordre du double ou du triple de celui des matériels existants. Le débourrage de l'ensemble de battage 1 est ainsi facile, et peut être réalisé sans intervention manuelle.

Grâce à leur inclinaison précitée, les glissières 16 permettent de déplacer le contre-batteur 3 en conservant un espace sensiblement constant entre les surfaces en regard du batteur 2 et du contre-batteur 3.

En outre, grâce à la partie postérieure articulée 12a du châssis 12 et à la course importante des pièces coulissantes 15 en avant du batteur 2, permise par les vérins 22, le contre-batteur 3 peut être sorti par l'avant de la machine, après démontage du tablier de coupe 25 et de la grille 11, sans démontage du batteur 2. Les galets 13 peuvent être dégagés des glissières 14 puis 16 pour permettre la dépose du contre-batteur 3.

## Revendications

1. Ensemble de battage pour moissonneuse-batteuse, du type comprenant un batteur rotatif de forme générale cylindrique et d'axe perpendiculaire au sens d'avancement de la machine, et un contre-batteur de courbure cylindrique ayant le même axe que le batteur, enveloppant une portion de la partie inférieure du batteur, caractérisé en ce que le batteur (2) présente un diamètre d'au moins 900 millimètres, c'est-à-dire au moins 40 % plus important que celui des batteurs existants, est fermé longitudinalement par une paroi circonférentielle continue, et comprend à sa périphérie une alternance de battes (5), portées par des nervures (6) faisant saillie radialement vers l'extérieur, et de rangées de doigts (7) faisant saillie sensiblement radialement vers l'extérieur.

2. Ensemble de battage selon la revendication 1, caractérisé en ce que le diamètre du batteur (2) est de l'ordre de 900 millimètres.

3. Ensemble de battage selon la revendication 1 ou la revendication 2, caractérisé en ce que le batteur (2) et le contre-batteur (3) présentent une longueur importante, de l'ordre de 2 mètres.

4. Ensemble de battage selon l'une des revendications 1 à 3, caractérisé en ce que le batteur (2) est entraîné en rotation au moyen d'un moteur hydrostatique.

5. Ensemble de battage selon l'une des revendications 1 à 4, caractérisé en ce que le châssis (12) du contre-batteur (3) comprend au moins deux galets latéraux (13), soit au moins un à chacune de ses extrémités, dont chacun est engagé, d'une part, dans une glissière inclinée (14) aménagée dans une pièce (15) coulissant horizontalement perpendiculairement à l'axe du contre-batteur (3) et, d'autre part, dans une glissière fixe (16) solidaire du châssis de la machine.

6. Ensemble de battage selon la revendication 5, caractérisé en ce que les glissières (14,16) ont une longueur importante, telle que le déplacement vertical du contre-batteur (3) puisse atteindre environ 100 millimètres.

7. Ensemble de battage selon la revendication 5 ou la revendication 6, caractérisé en ce que les glissières (16) solidaires du châssis sont inclinées vers le bas en direction de l'arrière de la machine.

8. Ensemble de battage selon l'une des revendications 5 à 7, caractérisé en ce que le châssis (12) du contre-batteur (3) présente une partie postérieure (12a) articulée autour d'un axe horizontal (18), de manière à pouvoir être plus ou moins repliée dans le prolongement de la partie antérieure de ce châssis (12), en ce que la course des pièces coulissantes (15) est telle que le contre-batteur (3) peut être sorti par l'avant de la machine, après démontage du tablier de coupe (25) et de la grille (11) du contre-batteur (3), sans démontage du batteur (2), et en ce que les galets (13) peuvent être dégagés des glissières (14,16) pour permettre la dépose du contre-batteur (3).

## Claims

1. Threshing assembly for a combine harvester, of the type comprising a rotary threshing drum of generally cylindrical shape and with an axis perpendicular to the direction of advance of the machine, and a concave of cylindrical curvature having the same axis as the threshing drum, surrounding a portion of the lower part of the threshing drum, characterized in that the threshing drum (2) has a diameter of at least 900 millimetres, that is to say at least 40% greater than that of existing threshing drums, is closed longitudinally by a continuous circumferential wall, and comprises at its periphery an alternating arrangement of beaters (5), carried by ribs (6) projecting radially outwards, and of rows of fingers (7) projecting substantially radially outwards.

2. Threshing assembly according to Claim 1, characterized in that the diameter of the threshing drum (2) is of the order of 900 millimetres.

3. Threshing assembly according to Claim 1 or Claim 2, characterized in that the threshing drum (2) and the concave (3) have a considerable length, of the order of 2 metres.

4. Threshing assembly according to one of Claims 1 to 3, characterized in that the threshing drum (2) is rotationally driven by means of a hydrostatic motor.

5. Threshing assembly according to one of Claims 1 to 4, characterized in that the frame (12) of the concave (3) comprises at least two lateral rollers (13), i.e. at least one at each of its ends, each of which rollers it engaged, on the one hand, in an inclined slide (14) formed in a piece (15) which slides horizontally perpendicularly to the axis of the concave (3) and, on the other hand, in a fixed slide (16) integral with the machine frame.

6. Threshing assembly according to Claim 5, characterized in that the slides (14,16) have a considerable length, such that the vertical displacement of the concave (3) can reach approximately 100 millimetres.

7. Threshing assembly according to Claim 5 or Claim 6, characterized in that the slides (16) integral with the frame are inclined downwards in the direction of the rear of the machine.

8. Threshing assembly according to one of Claims 5 to 7, characterized in that the frame (12) of the concave (3) has a rear part (12a) articulated about a horizontal axis (18) so as to be able to be tilted back more or less in the extension of the front part of this frame (12), in that the travel of the sliding pieces (15) is such that the concave (3) can be taken out by way of the front of the machine, after demounting the cutting elevator (25) and the grate (11) of the concave (3), without demounting the threshing drum (2), and in that the rollers (13) can be disengaged from the slides (14,16) to permit the removal of the concave (3).

## Patentansprüche

1. Dreschwerk für einen Mähdrescher mit einer drehbaren Dreschvorrichtung mit allgemein zylindrischer Form und einer senkrecht zur Vorrückrichtung der Maschine verlaufenden Achse und mit einer Gegen-Dreschvorrichtung mit zylindrischer Krümmung und derselben Achse wie die Dreschvorrichtung und die einen Abschnitt des unteren Teils der Dreschvorrichtung umhüllt, dadurch gekennzeichnet, daß die Dreschvorrichtung (2) einen Durchmesser von mindestens 900 mm hat, d.h. mindestens 40 % mehr als bei bisherigen Dreschvorrichtungen, daß sie in der Längsrichtung mittels einer in der Umfangsrichtung kontinuierlichen Wand geschlossen ist und daß sie in ihrem Randbereich in abwechselnder Anordnung Dreschstangen (5), die durch nach außen hin radial hervorstehende Streben (6) getragen werden, und eine Reihe aus im wesentlichen nach außen radial hervorstehenden Fingern (7) aufweist.

2. Dreschwerk nach Anspruch 1, dadurch gekennzeichnet, daß der Durchmesser der Dreschvorrichtung (2) etwa 900 mm ist.

3. Dreschwerk nach Anspruch 1 oder 2, dadurch gekennzeichnet, daß die Dreschvorrichtung (2) und die Gegen-Dreschvorrichtung (3) eine große Länge von etwa 2 m haben.

4. Dreschwerk nach einem der Ansprüche 1 bis 3, dadurch gekennzeichnet, daß die Dreschvorrichtung (2) mittels eines hydrostatischen Motors gedreht wird.

5. Dreschwerk nach einem der Ansprüche 1 bis 4, dadurch gekennzeichnet, daß das Fahrwerk (12) der Gegen-Dreschvorrichtung (3) mindestens 2 Seitenrollen (13) aufweist, und zwar mindestens eine an jedem ihrer Enden, von denen jede einerseits mit einer geneigten Gleitschiene (14), die in einem senkrecht zur Achse der Gegen-Dreschvorrichtung (3) senkrecht gleitenden Stück (15) ausgebildet ist, und andererseits mit einer mit dem Fahrwerk der Maschine einstückigen feststehenden Gleitschiene (16) im Eingriff ist.

6. Dreschwerk nach Anspruch 5, dadurch gekennzeichnet, daß die Gleitschienen (14, 16) eine große Länge haben, so daß die vertikale Verschiebung der Gegen-Dreschvorrichtung (3) ungefähr 100 mm erreichen kann.

7. Dreschwerk nach Anspruch 5 oder 6, dadurch gekennzeichnet, daß die mit dem Fahrwerk einstückigen Gleitschienen (16) nach unten hin in der Richtung des Hinterteils der Maschine geneigt sind.

8. Dreschwerk nach einem der Ansprüche 5 bis 7, dadurch gekennzeichnet, daß das Fahrwerk (12) der Gegen-Dreschvorrichtung (3) einen hinteren Teil (12a) aufweist, der um eine horizontale Achse (18) derart angelenkt ist, daß er in der Verlängerung des vorderen Teils dieses Fahrwerks (12) mehr oder weniger umgelegt werden kann, daß die Hublänge der Gleitstücke (15) derart bemessen ist, daß die Gegen-Dreschvorrichtung (3) nach dem Ausbau des Schnitt-Vorderbodens (25) und des Gitters (11) der Gegen-Dreschvorrichtung (3) ohne Ausbau der Dreschvorrichtung (2) über die Vorderseite der Maschine herausgenommen werden kann, und daß die Rollen (13) aus den Gleitschienen (14, 16) entnommen werden können, um ein Abstellen der Gegen-Dreschvorrichtung (3) zu gestatten.
